# EUROPÄISCHE PATENTANMELDUNG

(11) **EP 2 682 569 A1**
(43) Veröffentlichungstag der Anmeldung: **08.01.2014**
(21) Anmeldenummer: 12005297.2
(22) Anmeldetag: 19.07.2012
(51) Int. Cl.: F01K 23/10, F23C 9/08, F23J 15/04, F23L 7/00, F23L 15/00

(54) **Verfahren und Vorrichtung zur Umwandlung von Energie**

(30) Priorität: 05.07.2012 DE 102012013414
(71) Anmelder: Linde Aktiengesellschaft, 80331 Munich (DE)
(72) Erfinder: Alekseev, Alexander, Dr., 82515 Wolfratshausen (DE)

(57) **Zusammenfassung**

Es werden ein Verfahren und eine Vorrichtung zur Umwandlung von Energie vorgeschlagen, bei welchen ein kohlenwasserstoffhaltiger Energieträger in einem Brennraum (12) in einer sauerstoffangereicherten Atmosphäre verbrannt und erzeugte Wärme an einen Dampfkraftwerkkreislauf (60) übertragen wird. Rauchgas (104), welches bei der Verbrennung des kohlenwasserstoffhaltigen Energieträges entsteht, wird in einem Direktkontaktkühler (20) in direktem Kontakt zu einem Wasser enthaltenden Kühlmittelstrom (138) abgekühlt wird.

## Beschreibung

Die Erfindung betrifft ein Verfahren zur Umwandlung von Energie, bei welchem ein kohlenwasserstoffhaltiger Energieträger in einem Brennraum in einer sauerstoffangereicherten Atmosphäre verbrannt und erzeugte Wärme an einen Dampfkraftwerkkreislauf übertragen wird, gemäß dem Oberbegriff des Anspruchs 1.

Ferner betrifft die Erfindung eine Vorrichtung zur Umwandlung von Energie mit einem Brennraum zur Verbrennung eines kohlenwasserstoffhaltigen Energieträgers in einer sauerstoffangereicherten Atmosphäre und einem Dampfkraftwerkkreislauf, welcher zur Nutzung einer in dem Brennraum erzeugten Wärme mit dem Brennraum energetisch gekoppelt ist, gemäß dem Oberbegriff des Anspruchs 15.

### Stand der Technik

Sogenannte Oxyfuel-Kraftwerksverfahren sind bekannt. Bei diesen wird ein kohlenwasserstoffhaltiger Energieträger nicht in einer normalen Luftatmosphäre, sondern in einer sauerstoffangereicherten Atmosphäre oder sogar in nahezu reinem Sauerstoff verbrannt. Ein bei der Verbrennung entstehendes Rauchgas besteht dann im Idealfall hauptsächlich aus Kohlendioxid (CO₂) und Wasserdampf.

Das Verfahren eignet sich daher insbesondere als Energieumwandlungsverfahren in Kombination mit einer Abtrennung von Kohlendioxid. Aufgrund des hauptsächlich aus Kohlendioxid und Wasserdampf bestehenden Rauchgases lässt sich das Kohlendioxid vergleichsweise einfach aus dem Rauchgas abtrennen, indem zunächst der Wasserdampf kondensiert und das verbleibende Gas anschließend in einen Kohlendioxidanteil und einen gegebenenfalls vorhandenen Restgasanteil getrennt wird. Das abgetrennte Kohlendioxid kann beispielsweise im Boden verpresst beziehungsweise eingelagert werden (sogenannte "Carbon Capture and Storage"-Verfahren, CCS). Es gelangt somit nicht in die Atmosphäre der Erde. Kohlendioxid wird für einen erheblichen Anteil an der Erwärmung der Erde verantwortlich gemacht.

Ein Nachteil bei bekannten Oxyfuel-Verfahren besteht darin, dass das Rauchgas bei relativ niedrigen Temperaturen vorliegt, so dass die Kondensation des Wassers aus dem Rauchgas bei relativ niedrigen Temperaturen (kleiner 150 °C) erfolgt. Aufgrund der niedrigen Temperatur ist der Exergiegehalt dieser Wärme, also der nutzbare Anteil der Wärme, relativ niedrig. Die Kondensationsenergie wird daher in der Regel verworfen, also ohne energetische Nutzung an Kühlwasser abgegeben. Dies führt zu einem verschlechterten Wirkungsgrad des Prozesses.

Zur verbesserten Nutzung der Rauchgasabwärme, insbesondere der Kondensationsenergie des Wassers im Rauchgas, ist auch ein Oxyfuel-Kraftwerksverfahren bekannt, bei dem sowohl der Energieträger als auch der Sauerstoff komprimiert und bei Drücken im Bereich von etwa 50 bar in den Brennraum eingeleitet werden. Die Verbrennung findet dann bei einem entsprechend hohen Druck statt und das Rauchgas liegt am Austritt aus dem Brennraum ebenfalls bei einem hohen Druck vor.

Ein Vorteil dieses Verfahrens liegt darin, dass der gesamte Rauchgasweg, also der Weg vom Austritt aus dem Brennraum bis zur Kondensation des Rauchgases, aufgrund des reduzierten Volumens deutlich kompakter ausgeführt werden kann. Ein weiterer Vorteil besteht darin, dass der Rauchgastaupunkt, also die Temperatur, bei welcher eine Kondensation des Rauchgases beginnt, im Vergleich zu dem Niederdruck-Oxyfuel-Verfahren wesentlich höher liegt. Folglich liegt auch die Kondensationsenergie bei höheren Temperaturen vor, so dass der Exergiegehalt dieser Energie größer ist.

Durch Integration dieser Wärme beziehungsweise Energie in den Dampfkraftwerkkreislauf, z.B. durch Nutzung der Energie zur Vorwärmung eines Arbeitsfluides des Dampfkraftwerkkreislaufes, in der Regel Speisewasser, kann der Gesamtwirkungsgrad der Vorrichtung, welche auch als Kraftwerk bezeichnet werden kann, verbessert werden.

Zur Nutzung der Energie des Rauchgases wird bei einem bekannten Verfahren der Wasserdampf des Rauchgases in einem Wärmeübertrager (Rauchgaskondensationswärmeübertrager) im Gegenstrom zu dem Speisewasser des Dampfkraftwerkkreislaufes kondensiert, wobei das Speisewasser vorgewärmt wird.

Durch die Speisewasservorwärmung ist es möglich, die Anzahl der üblicherweise vorgenommenen Anzapfungen sowie die Menge des angezapften Dampfes aus den Turbinen zur Speisewasservorwärmung, insbesondere im Mittel- und Niederdruckbereich, zu reduzieren. Die Turbinen können somit mehr elektrische beziehungsweise mechanische Leistung generieren.

Ein Problem bei dieser Nutzung der Energie des Rauchgases besteht jedoch darin, dass das Rauchgas in der Realität im Unterschied zu dem idealisierten Modell nicht nur Kohlendioxid und Wasser, sondern auch eine Vielzahl von weiteren Komponenten, wie beispielsweise Schwefeloxide und Stickoxide enthält, welche in Wasser löslich sind. Daneben steigt mit steigendem Druck auch die Löslichkeit des Kohlendioxids in Wasser. Die genannten Stoffe stellen in Wasser gelöst starke Säuren dar.

Aufgrund der hohen Drücke, der hohen Temperaturen, einer großen zu übertragenden Wärmemenge und der sauren Wasserlösung ergeben sich hohe Anforderungen an den Rauchgaskondensationswärmeübertrager. Diese Anforderungen können bisher nur mit einem sehr hohen technischen Aufwand, welcher mit entsprechend hohen Kosten verbunden ist, bewältigt werden.

Ein weiterer Nachteil der bekannten Lösung besteht darin, dass die verfügbare Kondensationswärme des Rauchgases größer ist als die Wärme, die zur Anwärmung des Speisewassers benötigt wird. Die Kondensationswärme lässt sich daher nicht vollständig in das Verfahren integrieren und nutzen, so dass das theoretisch vorhandene Verbesserungspotential nicht vollständig ausgeschöpft werden kann.

Die Nutzung der Kondensationsenergie des Rauchgases eines Oxyfuel-Prozesses zur Speisewasservorwärmung ist in US 6,918,253 B2 und US 6,196,000 B1 beschrieben.

Der Erfindung liegt daher die Aufgabe zugrunde, ein Verfahren und eine Vorrichtung zur Umwandlung von Energie anzugeben, welche besonders wirtschaftlich sind und insbesondere eine energie- und kosteneffiziente Nutzung der Rauchgasabwärme eines Oxyfuel-Kraftwerksprozesses ermöglichen.

### Offenbarung der Erfindung

Die Aufgabe wird erfindungsgemäß durch ein Verfahren mit den Merkmalen des Anspruchs 1 und eine Vorrichtung mit den Merkmalen des Anspruchs 15 gelöst. Bevorzugte Ausgestaltungen der Erfindung sind in den abhängigen Ansprüchen und der nachfolgenden Beschreibung angegeben.

### Vorteile der Erfindung

Das Verfahren ist erfindungsgemäß dadurch gekennzeichnet, dass das Rauchgas, welches bei der Verbrennung des kohlenwasserstoffhaltigen Energieträges entsteht, in einem Direktkontaktkühler in direktem Kontakt zu einem Wasser enthaltenden Kühlmittelstrom abgekühlt wird.

Hinsichtlich der Vorrichtung ist erfindungsgemäß vorgesehen, dass dem Brennraum ein Direktkontaktkühler nachgeschaltet ist, in welchem ein bei der Verbrennung des kohlenwasserstoffhaltigen Energieträges entstehendes Rauchgas in direktem Kontakt zu einem Wasser enthaltenden Kühlmittelstrom abkühlbar ist.

Ein Vorteil des erfindungsgemäßen Verfahrens und der erfindungsgemäßen Vorrichtung besteht darin, dass der Wärme- und Stofftransport in einem Direktkontaktapparat deutlich intensiver ist als in einem Wärmeübertrager (Wärmetauscher) mit stofflich getrennten Strömen. Die Wärmeübertragung beziehungsweise der Wärmeaustausch läuft daher effizienter ab, so dass weniger Oberfläche benötigt wird, was zu einer beträchtlichen Senkung der Kosten führt.

Ein weiterer Vorteil der direkten Kontaktierung des Rauchgases mit dem wasserhaltigen Kühlmittel besteht darin, dass durch das flüssige Wasser eine Rauchgaswäsche erfolgt, in welcher zumindest ein Teil des Wasserdampfes aus dem Rauchgas ausgewaschen beziehungsweise kondensiert wird. In dem Direktkontaktkühler erfolgt also eine Stofftrennung. Der den Direktkontaktkühler verlassende, abgekühlte Gasstrom enthält einen geringeren Wasseranteil als der in den Direktkontaktkühler eintretende, heiße Rauchgasstrom. Vorzugsweise enthält der abgekühlte Gasstrom bereits relativ reines Kohlendioxid, zusammen mit gegebenenfalls vorhandenen gasförmigen Verunreinigungen und einem vorzugsweise geringen Wasserdampfanteil. In dem Direktkontaktkühler kann in einer vorteilhaften Ausgestaltung der Erfindung eine zumindest teilweise, vorzugsweise weitgehende, Abtrennung des Wasseranteils aus dem Rauchgas vorgenommen werden.

Ein Grundgedanke der Erfindung kann darin gesehen werden, die Kondensationswärme des Rauchgases nicht direkt an das Arbeitsfluid (Speisewasser) des Dampfkraftwerkkreislaufes, sondern an einen Kühlmittelstrom abzugeben, der anschließend als Wärmeträgermedium verwendet wird. Die Übertragung der Wärme an den Kühlmittelstrom erfolgt dabei in einer direkten Kontaktierung des Raüchgases mit dem kalten Flüssigstrom, welcher hierbei mit Wasser aus dem Rauchgas angereichert wird. Die nutzbare Wärme des Rauchgases wird also an ein Wärmeträgermedium abgegeben, welches die Wärme anschließend an einen oder gegebenenfalls mehrere Verbraucher weitergeben beziehungsweise verteilen kann. Dies ermöglicht eine besonders effiziente und flexible Nutzung der Kondensationswärme des Rauchgases.

Die energetische Koppelung des Brennraumes mit dem Dampfkraftwerkkreislauf ist insbesondere durch eine Durchleitung des Arbeitsfluides durch den Brennraum, insbesondere in Rohrleitungen, realisiert. In den Rohrleitungen erfolgt eine Verdampfung und gegebenenfalls Überhitzung des Arbeitsfluides.

Vorzugsweise handelt es sich bei dem Wasser enthaltenden Kühlmittelstrom, welcher in den Direktkontaktkühler eingeleitet wird, um einen wasserreichen oder überwiegend aus Wasser bestehenden Strom, zum Beispiel mit einem Wasseranteil von mindestens 80 oder 90%. Vereinfachend kann daher davon gesprochen werden, dass es sich bei dem Kühlmittelstrom um Wasser handelt. Das Rauchgas wird in direktem Kontakt zu dem Wasserstrom kondensiert und gegebenenfalls gekühlt. Der Kühlmittelstrom kann insbesondere ein in einem Kreislauf geführter Strom sein, welcher aus dem Rauchgas kondensiertes Wasser enthält oder zumindest weitgehend aus diesem besteht. In dem Kühlmittelstrom können daher Verunreinigungen beziehungsweise Komponenten des Rauchgases enthalten sein, die sich in Wasser lösen.

Der Rauchgasstrom wird vorzugsweise in einem unteren Bereich in den Direktkontaktkühler eingeleitet und im Gegenstrom zu dem Kühlmittel geführt, welches vorzugsweise in einen oberen Bereich des Direktkontaktkühlers eingeleitet wird und in dem Direktkontaktkühler herabrieselt. Zur Bereitstellung eines intensiven Kontaktes des Gases mit der Flüssigkeit enthält der Direktkontaktkühler vorzugsweise Füllkörper oder Packungen. Im Hinblick auf die hohen Temperaturen und Drücke ist die Verwendung von Keramik und/oder Metall bevorzugt.

Bei dem Energieträger (Brennstoff, Treibstoff) kann es sich um einen festen, flüssigen und/oder gasförmigen Einsatzstoff handeln. Zur Bereitstellung der Kondensationswärme auf einem technisch effizient nutzbaren Temperaturniveau ist es erfindungsgemäß bevorzugt, dass die Verbrennung des kohlenwasserstoffhaltigen Energieträgers in dem Brennraum, welcher auch als Brennkammer bezeichnet werden kann, bei einem Druck oberhalb Atmosphärendruck erfolgt. Das Rauchgas hat damit ebenfalls einen erhöhten Druck und einen entsprechenden Taupunkt (Taupunkttemperatur).

Ein bevorzugter Druckbereich für die Verbrennung des Energieträges liegt bei 5 bis 100 bar (abs.), in einer anderen Ausgestaltung bei 40 bis 100 bar (abs.). Insbesondere ist es bevorzugt, dass die Verbrennung des kohlenwasserstoffhaltigen Energieträges in dem Brennraum bei mindestens 8 bar (abs.), vorzugsweise mindestens 10 bar (abs.), erfolgt. In der anderen Ausgestaltung ist es bevorzugt, dass die Verbrennung des kohlenwasserstoffhaltigen Energieträges in dem Brennraum bei mindestens 40 bar (abs.), vorzugsweise mindestens 80 bar (abs.), erfolgt. In Abhängigkeit von der konkreten Rauchgaszusammensetzung liegt der Taupunkt des Rauchgases beispielsweise bei einem Rauchgasdruck von 80 bar in einem Bereich oberhalb von 200°C.

Dementsprechend ist es bevorzugt, dass ein aus dem Direktkontaktkühler abgezogener Flüssigstrom als Wärmeträgermedium zur Energienutzung verwendet wird. Zur Energienutzung kann der Strom insbesondere in zumindest einem Wärmeübertrager abgekühlt werden. Bei dem aus dem Direktkontaktkühler abgezogenen Flüssigstrom handelt es sich vorzugsweise im Wesentlichen um Wasser, welches gegebenenfalls gelöste Stoffe wie Schwefeloxide, Stickoxide oder Kohlendioxid enthalten kann.

Zur Effizienzsteigerung des Kraftwerkprozesses ist es besonders bevorzugt, dass zumindest ein Teil des aus dem Direktkontaktkühler abgezogenen Flüssigstroms zur Vorwärmung eines Arbeitsfluides des Dampfkraftwerkkreislaufes verwendet wird.

Bei dem Dampfkraftwerkkreislauf handelt es sich in grundsätzlich bekannter Weise um einen Kreislauf mit einem verdampfbaren Arbeitsfluid zur Umwandlung von Wärme in mechanische Arbeit (Energie). Zur Erzeugung der mechanischen Energie wird das dampfförmige Arbeitsfluid in einer Dampfturbine entspannt (Rankine-Prozess). Die Dampfturbine ist zur Stromerzeugung mit einem Generator gekoppelt. Das Arbeitsfluid wird mittels einer Pumpe auf einen oberen Druck gefördert. Das unter Druck stehende Arbeitsfluid wird anschließend durch Wärmezufuhr verdampft und überhitzt und in der Dampfturbine zu einem unteren Druck entspannt. Nach Kondensation in einem Kondensator wird das Fluid erneut auf den oberen Druck gebracht. Zur Verdampfung und Überhitzung wird das Arbeitsfluid üblicherweise in Rohrleitungen durch den Brennraum geleitet. Die Endtemperatur kann abhängig von der konkreten Auslegung im Bereich von etwa 500 °C bis 700 °C, insbesondere bei etwa 600 °C, liegen. Vorzugsweise handelt es sich bei dem Arbeitsfluid um Wasser, welches auch als Speisewasser bezeichnet wird.

Vorzugsweise erfolgt vor der Verdampfung und Überhitzung des Arbeitsfluides eine Vorwärmung, um den Wirkungsgrad der Energieumwandlung zu erhöhen. Die Vorwärmung des Arbeitsfluides, welche insbesondere als Speisewasservorwärmung bezeichnet werden kann, erfolgt durch Wärmeübertragung von dem Flüssigstrom aus dem Direktkontaktkühler an das Arbeitsfluid des Dampfkraftwerkkreislaufes. Der aus dem Direktkontaktkühler abgezogene Flüssigstrom wird hierbei abgekühlt und das Arbeitsfluid (Speisewasser) erwärmt.

Mit Vorteil erfolgt die Vorwärmung des Arbeitsfluides in zumindest einem Flüssig-Flüssig-Wärmeübertrager. Bei dem Flüssig-Flüssig-Wärmeübertrager handelt es sich vorzugsweise um einen Wasser-Wasser-Wärmeübertrager mit Speisewasser auf der einen Seite und dem aus dem Direktkontaktkühler abgezogenen Wasserstrom auf der anderen Seite. Die Speisewasservorwärmung des Dampfkraftwerkkreislaufes kann auf diese Weise in konventionellen Wasser-Wasser-Wärmeübertragern erfolgen und somit kostengünstig und mit relativ geringem apparatetechnischem Aufwand realisiert werden. Vorzugsweise erfolgt die Speisewasservorwärmung im Gegenstrom zu dem aus dem Direktkontaktkühler abgezogenen Flüssigstrom.

Alternativ oder zusätzlich zu der Erwärmung des Arbeitsfluides kann zumindest ein Teil des aus dem Direktkontaktkühler abgezogenen Flüssigstroms zur Verdampfung des Arbeitsfluides des Dampfkraftwerkkreislaufes verwendet werden. Das verdampfte und gegebenenfalls (leicht) überhitzte Arbeitsfluid kann dann in einen Niederdruckturbinenteil der Dampfturbine eingespeist werden und somit die Leistung der Dampfturbine erhöhen. Diese Dampfeinspeisung kann sinngemäß als eine negative Dampfentnahme angesehen werden.

Eine weitere bevorzugte Möglichkeit der Nutzung der Energie des Rauchgases besteht darin, dass zumindest ein Teil des aus dem Direktkontaktkühler abgezogenen Flüssigstroms in einem Sauerstoffvorwärmer zur Vorwärmung eines Sauerstoffstromes verwendet wird. Unter einem Sauerstoffstrom wird hierbei ein Strom verstanden, welcher zumindest einen Sauerstoffanteil enthält, welcher größer ist als der Sauerstoffanteil in Umgebungsluft. Beispielsweise kann es sich um einen Strom mit einem Sauerstoffanteil von mindestens 80%, vorzugsweise etwa 97%, handeln. Der Sauerstoffstrom wird zur Bereitstellung der sauerstoffangereicherten Atmosphäre, in welcher die Verbrennung des Energieträgers erfolgt, in den Brennraum eingeleitet. Die Vorwärmung des Sauerstoffes vor Einleitung in den Brennraum führt zu einer Verbesserung des Wirkungsgrades des Gesamtprozesses.

Unter einer sauerstoffangereicherten Atmosphäre wird im Rahmen der vorliegenden Erfindung eine Atmosphäre verstanden, welche einen größeren Sauerstoffanteil enthält als Umgebungsluft. Vorzugsweise beträgt der Sauerstoffanteil in einer sauerstoffangereicherten Atmosphäre mindestens 80%, vorzugsweise etwa 97%.

Eine effiziente Erwärmung beziehungsweise Vorwärmung des Sauerstoffstroms kann dadurch realisiert werden, dass der Sauerstoffstrom in einem Direktkontaktwärmeübertrager (Direktkontaktheizer) in direktem Kontakt zu dem aus dem Direktkontaktkühler abgezogenen Flüssigstrom oder einem Teil hiervon erwärmt wird. Hierbei kann insbesondere vorgesehen sein, dass der gasförmige Sauerstoffstrom unten in den Direktkontaktwärmeübertrager eingeleitet und im Gegenstrom zu der Flüssigkeit geführt wird, die vorzugsweise in einem oberen Bereich eingeleitet wird und in dem Direktkontaktwärmeübertrager herabrieselt. Der Direktkontaktwärmeübertrager weist zur Bereitstellung eines intensiven Gas-Flüssig-Kontaktes vorzugsweise eine Packung oder Füllkörper auf. Die Vorwärmung des Sauerstoffes durch direkten Kontakt mit einer kondensierten Wasserfraktion aus dem Rauchgas gewährleistet einen besonders effizienten Wärmetransport, so dass im Vergleich zu einem konventionellen Wärmeübertrager eine geringere Oberfläche benötigt wird.

Vorzugsweise wird ein aus dem Sauerstoffvorwärmer abgezogener Flüssigstrom zumindest teilweise als Kühlmittelstrom in den Direktkontaktkühler rückgeführt. Bei diesem Strom handelt es sich um einen wasserreichen oder überwiegend aus Wasser bestehenden Strom. Die Rückführung dieses Wasserstromes in den Direktkontaktkühler zum Kondensieren beziehungsweise Kühlen des Rauchgases kann entweder direkt oder über einen weiteren Wärmeübertrager, beispielsweise einen Kühlwasserwärmeübertrager, erfolgen.

Besonders bevorzugt ist es nach der Erfindung, dass ein aus dem Direktkontaktkühler abgezogener Flüssigstrom nach Abkühlung zumindest teilweise als Kühlmittelstrom in den Direktkontaktkühler rückgeführt wird. Der Kühlmittelstrom wird also in einem Kreislauf geführt, wobei er unter Aufnahme eines Wasseranteils des Rauchgases in dem Direktkontaktkühler erwärmt, unter Abgabe von Wärme an Wärmeverbraucher gekühlt und erneut in den Direktkontaktkühler eingeleitet wird. Aufgrund der Aufnahme von Wasser und gegebenenfalls anderen Komponenten aus dem Rauchgasstrom erfolgt zum Ausgleich der Materialbilanz eine Ausschleusung eines Teilstroms, welcher im Wesentlichen Wasser enthält.

Zum Schutz der Apparate und Leitungen des Wasserkreislaufes, beispielsweise vor Korrosion, wird vorzugsweise der aus dem Direktkontaktkühler abgezogene Flüssigstrom einer Wasserbehandlungseinrichtung zugeführt. In der Wasserbehandlungseinrichtung erfolgt eine Wasseraufbereitung, welche beispielsweise die Einstellung eines pH-Wertes und/oder die Zugabe von Korrosionsschutzmitteln beinhalten kann.

Eine bevorzugte Maßnahme zur Einstellung, insbesondere Absenkung, der Verbrennungstemperatur in dem Brennraum ist die Rückführung eines Teils des Rauchgases in den Brennraum. Hierzu wird ein Teil des Rauchgases vorzugsweise vor dem Direktkontaktkühler abgezweigt und über ein Gebläse in den Brennraum rückgeführt.

Eine weitere Möglichkeit, die Verbrennungstemperatur in dem Brennraum zu beeinflussen, besteht darin, einen Teil des aus dem Direktkontaktkühler abgezogenen Flüssigstroms in den Brennraum rückzuführen. Der Flüssigstrom, welcher überwiegend Wasser enthält und somit als Wasserstrom bezeichnet werden kann, kann entweder flüssig in den Brennraum eingeleitet werden oder zuvor in einem Wärmeübertrager zumindest teilweise verdampft und dann zumindest teilweise dampfförmig in den Brennraum eingeleitet werden. Im Falle einer vorherigen Verdampfung ist es bevorzugt, den Flüssigstrom beziehungsweise Wasserstrom gegen Rauchgas aus dem Brennraum zu erwärmen beziehungsweise zu verdampfen. Der hierzu vorgesehene Wärmeübertrager ist im Rauchgasweg vorzugsweise stromauf des beziehungsweise vor dem Direktkontaktkühler installiert.

### Kurze Beschreibung der Zeichnungen

Die Erfindung wird nachfolgend anhand bevorzugter Ausführungsformen, die in den beigefügten, schematischen Figuren dargestellt sind, weiter beschrieben. Es zeigt:
- Figur 1: ein Verfahrensschema einer Ausführungsform eines erfindungsgemäßen Verfahrens und einer entsprechenden Vorrichtung;
- Figur 2: ein Verfahrensschema einer Ausführungsform eines erfindungsgemäßen Verfahrens und einer entsprechenden Vorrichtung;
- Figur 3: ein Verfahrensschema einer Ausführungsform eines erfindungsgemäßen Verfahrens und einer entsprechenden Vorrichtung;
- Figur 4: ein Verfahrensschema eines Dampfkraftwerkkreislaufes nach dem Stand der Technik und
- Figur 5: ein Verfahrensschema eines Oxyfuel-Prozesses nach dem Stand der Technik.

### Ausführungsformen der Erfindung

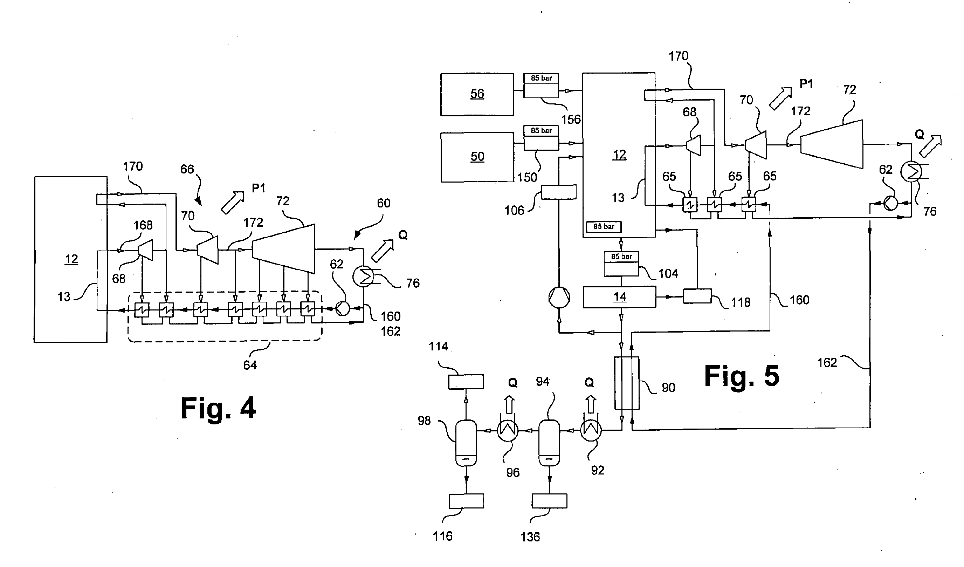

Anhand der Figuren 4 und 5 werden zunächst ein konventioneller Dampfkraftprozess sowie ein bekanntes Oxyfuel-Verfahren beschrieben.

Bei einem konventionellen Dampfkraftprozess wird ein Arbeitsfluid 160, welches üblicherweise Wasser (Speisewasser 162) ist, in einem Kreislauf geführt. Ein Dampfkraftwerkkreislauf 60 (Rankine Cycle) umfasst eine Speisewasserpumpe 62, einen Speisewasservorwärmteil 64, eine Dampfturbineneinheit 66 und einen Kondensator 76. Die Dampfturbineneinheit 66 kann, wie in den Figuren dargestellt, mehrere Teile umfassen, beispielsweise einen Hochdruckteil 68, einen Mitteldruckteil 70 und einen Niederdruckteil 72, die aus jeweils eigenständigen Turbinen bestehen können. Die entsprechenden Turbinen (Hockdruckturbine, Mitteldruckturbine und Niederdruckturbine) können jeweils mehrere Entspannungsstufen (Laufräder) aufweisen.

Das Arbeitsfluid 160 beziehungsweise Speisewasser 162 wird mittels der Speisewasserpumpe 62, welche mehrere Pumpeneinheiten mit unterschiedlichen Druckstufen aufweisen kann, auf ein Hochdruckniveau gebracht. Dieses kann je nach Auslegung im Bereich von 300 bar liegen. Das Speisewasser 162 wird in dem Speisewasservorwärmteil 64 vorgewärmt und anschließend in Rohrleitungen 13 durch einen Brennraum 12 geführt, in welchem ein Energieträger (Brennstoff) verbrannt wird. In dem Brennraum 12 wird das Speisewasser weiter angewärmt, verdampft und überhitzt.

Der entstehende Hochdruckdampf 168 wird in der Dampfturbineneinheit 66 entspannt. Die Entspannung erfolgt vorzugsweise in mehreren Stufen, wobei zunächst der überhitzte Hochdruckdampf 168 in dem Hochdruckteil 68 der Dampfturbineneinheit 66 entspannt und danach nochmals durch den Brennraum 12 geführt und erneut oder weiter überhitzt wird. Danach wird der Dampf als Mitteldruckdampf 170 in dem Mitteldruckteil 70 und als Niederdruckdampf 172 in dem Niederdruckteil 72 entspannt und anschließend in dem Kondensator 76 kondensiert.

Zur Vorwärmung des Speisewassers 162 wird eine Reihe von Wärmeübertragern 65 verwendet. Das Speisewasser 162 wird durch Dampf erwärmt, der an geeigneten Stellen der Turbineneinheit 66 entnommen wird. Durch diese Dampfentnahmen reduziert sich die Dampfmenge in den Turbinen, so dass die Gesamtleistung reduziert wird.

Figur 5 zeigt ein bekanntes Verfahren zur Umwandlung von Energie. Eine Vorrichtung 10 zur Umwandlung von Energie umfasst einen Brennraum 12, in welchem ein kohlenwasserstoffhaltiger Energieträger in einer Sauerstoffatmosphäre verbrannt wird. Der Energieträger wird als Brennstoffstrom 156 aus einer Brennstoffbereitstellungseinheit 56 in den Brennraum 12 eingeleitet. Zur Bereitstellung der Sauerstoffatmosphäre wird aus einer Luftzerlegungseinrichtung 50 ein sauerstoffangereicherter Strom, welcher als Sauerstoffstrom 150 bezeichnet wird, zugeführt.

Der Energieträger wird in dem Brennraum 12 verbrannt und hierbei entstehende Wärme wird über Rohrleitungen 13 an einen Dampfkraftwerkkreislauf 60 übertragen. Die Vorwärmung des Speisewassers 162 erfolgt in einem ersten Schritt in einem Gegenstromwärmeübertrager 90 im Gegenstrom zu kondensierendem Rauchgas 104. Der Gegenstromwärmeübertrager 90 ist aufgrund der herrschenden Temperaturen und der Stoffzusammensetzung des Rauchgases 104 besonders hohen Belastungen ausgesetzt. Eine weitere Speisewasservorwärmung erfolgt in Wärmetauschern 65 durch Dampfentnahme aus der Dampfturbineneinheit 66.

Vor dem Einleiten des Rauchgases 104 werden in einer Partikelabtrenneinrichtung 14 Feststoffpartikel abgetrennt und als Asche 118 abgezogen. Ein Teil des Rauchgasstroms wird mittels eines Gebläses 36 als Teilstrom 106 in den Brennraum 12 rückgeführt.

In einem Rauchgaskühler 92 wird das Rauchgas weiter abgekühlt. Auskondensiertes Wasser wird als Wasserproduktstrom 136 aus einem Wassertrennbehälter 94 abgezogen. Nach einer Verflüssigung des Kohlendioxids in einem CO₂-Kondensator 96 werden aus einem CO₂-Trennbehälter 98 ein flüssiger CO₂-Produktstrom 116 und ein gasförmiger Restgasstrom 114 abgezogen.

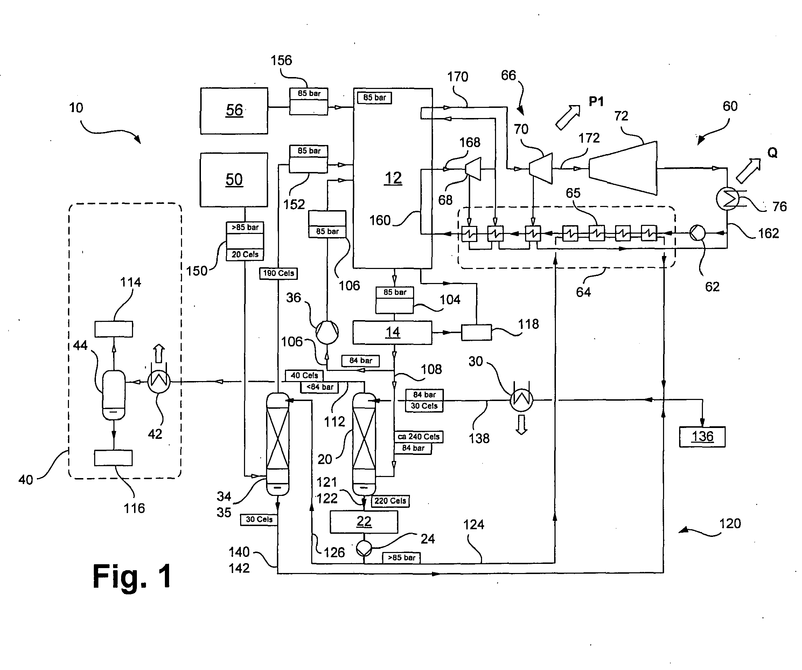

In den Figuren 1 bis 3 sind bevorzugte Ausgestaltungen einer erfindungsgemäßen Anlage oder Vorrichtung 10 zur Umwandlung von Energie dargestellt. Zum besseren Verständnis und zur Darstellung möglicher Betriebspunkte sind dabei beispielhafte Prozessparameter angegeben. Diese können auch als Mittelwerte einer Parameterspanne angesehen werden, die vorzugsweise durch eine Abweichung nach oben und unten von dem dargestellten Mittelwert von 10% oder 20% definiert ist. Gleiche, gleichwirkende oder ähnliche Komponenten beziehungsweise Ströme sind in sämtlichen Figuren mit denselben Bezugszeichen gekennzeichnet. Soweit die Vorrichtung und das Verfahren denjenigen der Figuren 4 und 5 entsprechen, wird zur Vermeidung von Wiederholungen auf die dortigen Ausführungen Bezug genommen.

Eine erste bevorzugte Ausführungsform der Erfindung ist in Figur 1 gezeigt. Die Vorrichtung 10 zur Umwandlung von Energie umfasst einen Brennraum 12, in welchem ein kohlenwasserstoffhaltiger Energieträger in einer sauerstoffangereicherten Atmosphäre verbrannt wird. Der Energieträger wird als Brennstoffstrom 156 aus einer Brennstoffbereitstellungseinheit 56 (Brennstoffsystem) zugeführt. Entstehende Wärme wird zur Erzeugung mechanischer Energie in einem Turbinensystem an einen Dampfkraftwerkkreislauf 60 übertragen.

Zur Bereitstellung der Sauerstoffatmosphäre wird in einer Luftzerlegungseinrichtung 50 ein sauerstoffangereicherter Strom, welcher als Sauerstoffstrom 150 bezeichnet wird, erzeugt. Der Sauerstoffstrom 150 liegt bei einem Druck oberhalb eines Brennraumdruckes vor. Der Druck kann beispielsweise mindestens 80 bar betragen. Die Temperatur am Ausgang der Luftzerlegungseinrichtung 50 kann beispielsweise etwa Umgebungstemperatur, also etwa 20 °C betragen.

Vor der Einleitung in den Brennraum 12 wird der Sauerstoffstrom 150 in einem Sauerstoffvorwärmer 35, welcher in der dargestellten Ausführungsform ein Direktkontaktwärmeübertrager 34 ist, vorgewärmt. Der vorzugsweise auf etwa 180°C bis 200°C vorgewärmte Sauerstoffstrom 152 wird in den Brennraum 12 eingeleitet.

Ein durch die Verbrennung entstehendes Rauchgas 104 (Rauchgasstrom) verlässt den Brennraum 12 und wird zur Abtrennung von Feststoffpartikeln einer Partikelabtrenneinrichtung 14 zugeführt. Die abgetrennten Feststoffpartikel werden zusammen mit einem Feststoffstrom aus dem Brennraum 12 als Asche 118 abgezogen. Nach der Partikelabtrenneinrichtung 114 wird der Rauchgasstrom in einen ersten Teilstrom 106, welcher in den Brennraum 12 rückgeführt wird, und einen zweiten Teilstrom 108 geteilt. Zur Rückführung des Teilstroms 106 in den Brennraum 12 ist ein beispielsweise ein Gebläse 36 vorgesehen.

Der zweite Teilstrom 108 wird zur Abkühlung und Teilkondensierung in einen Direktkontaktkühler 20 geführt. Der Direktkontaktkühler 20 kann ein Behälter oder eine Kolonne aufweisen. Der Behälter beziehungsweise die Kolonne kann Füllkörper und/oder strukturierte Packungen enthalten.

Der Teilstrom 108 des Rauchgases wird in einen unteren Bereich des Direktkontaktkühlers 20 eingeleitet und steigt im Gegenstrom zu einem herabrieselnden Kühlmittel auf. Als Kühlmittel wird ein aus dem Sumpf des Direktkontaktkühlers 20 abgezogener, wasserreicher Flüssigstrom 121 verwendet. Dieser Flüssigstrom 121, welcher auch als Wasserstrom 122, Rauchgaskondensationsstrom oder Sumpfstrom bezeichnet werden kann, wird zumindest teilweise nach Abkühlung als Kühlmittelstrom 138 in einen oberen Bereich des Direktkontaktkühlers 20 eingeleitet und somit in einem Kreislauf (Wasserkreislauf 120) geführt.

In dem Direktkontaktkühler 20 erfolgt eine Kühlung und teilweise Verflüssigung des Rauchgases 104 beziehungsweise Teilstroms 108. Aufgrund des direkten Kontakts mit dem Kühlmittelstrom 138 (Wasserstrom) kondensiert ein überwiegender Teil des Wasserdampfes aus dem Rauchgas 104 aus. Es erfolgt also eine Abreicherung von Wasser beziehungsweise Wasserdampf. Der abgekühlte Rauchgasstrom 112 verlässt den Direktkontaktkühler 20 und wird einer CO₂-Abtrerineinheit 40 zugeführt. Dort wird der Rauchgasstrom 112 in einen flüssigen CO₂-Produktstrom 116, welcher überwiegend Kohlendioxid enthält, und einen gasförmigen Restgasstrom 114 getrennt. Die CO₂-Abtrenneinheit 40 weist einen CO₂-Kondensator 42 und einen Gas-Flüssig-Trennbehälter 44 auf. Gegebenenfalls können auch noch Nachbehandlungsschritte, zum Beispiel eine weitere Aufreinigung des CO₂-Stroms erfolgen.

Der zuvor erwähnte, flüssige Wasserstrom 122 wird aus dem Sumpf des Direktkontaktkühlers 20 abgezogen. Die Temperatur des Wasserstroms 122 entspricht dem Taupunkt des Rauchgases bei gegebenem Druck und gegebener Rauchgaszusammensetzung. Der Wasserstrom 122 wird zunächst in einer Wasserbehandlungseinrichtung 22 chemisch aufbereitet und anschließend in einer Reihe von Wärmeübertragern abgekühlt, um danach als Kühlmittelstrom 138 zumindest teilweise dem Direktkontaktkühler 20 erneut zugeführt zu werden.

Die Zirkulation des Wasserstroms 122 erfolgt mittels einer Pumpe 24, welche mehrere Pumpeneinheiten aufweisen kann. Der Wasserstrom 122 wird in zumindest zwei Teilströme geteilt, welche unterschiedlichen Wärmenutzern zugeführt werden. Gemäß der Ausgestaltung nach Figur 1 wird ein erster Teilstrom 124 zur Speisewasservorwärmung des Dampfkraftwerkkreislaufes 60 verwendet. Ein zweiter Teilstrom 126 wird zur Vorwärmung des Sauerstoffstromes 150 verwendet.

Zur Vorwärmung des Speisewassers 162 wird der Teilstrom 124 in einem oder mehreren Wärmetauschern 65 des Speisewasservorwärmteils 64 im Gegenstrom zu dem Speisewasser 162 geführt und dabei abgekühlt. Die Wärmeübertragung erfolgt in Flüssig-Flüssig-Wärmeübertragern mit stofflich getrennten Strömen. Zusätzlich kann in weiteren Wärmetauschern 65 eine Speisewasservorwärmung durch Dampfentnahme aus der Turbineneinheit 66 erfolgen.

Der Teilstrom 126 wird in einem oberen Bereich in den Direktkontaktwärmeübertrager 34 eingeleitet und fließt in dem Wärmeübertrager herab. Der zu erwärmende Sauerstoffstrom 150 (Gas) wird dem Direktkontaktwärmeübertrager 34 in einem unteren Bereich zugeführt und steigt in dem Wärmeübertrager auf.

Aus dem Sumpf des Direktkontaktwärmeübertragers 34 wird ein Flüssigstrom 140 abgezogen, welcher auch als Sumpfstrom 142 bezeichnet werden kann. Dieser im Wesentlichen Wasser enthaltende Strom wird mit einem Rücklaufstrom aus den Wärmeübertragern 65 zusammengeführt und in einem Wasserkühler 30 gegen Kühlwasser weiter gekühlt. Der abgekühlte Strom wird als Kühlmittelstrom 138 erneut auf den Direktkontaktkühler 20 aufgegeben. Ein Wasserproduktstrom 136 wird aus dem Wasserkreislauf 120 abgezogen.

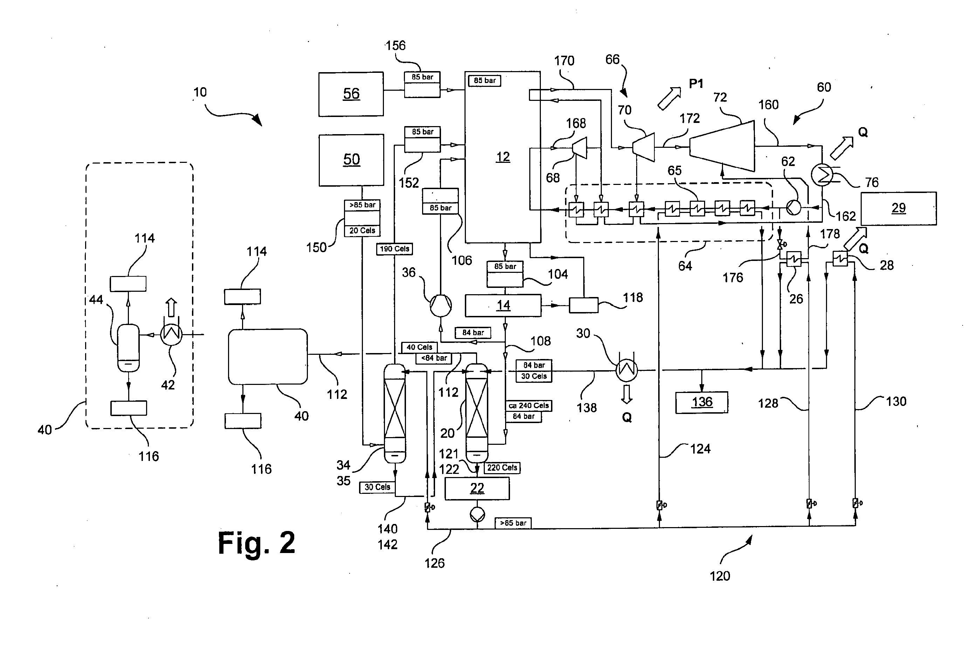

In Figur 2 sind weitere Nutzungsmöglichkeiten der thermischen Energie des aus dem Direktkontaktkühler 20 abgezogenen Wasserstromes 122 aufgezeigt. Hier wird ein Teilstrom 128 zu einem Wärmeübertrager (Speisewasserverdampfer 26) geleitet, in welchem ein Teil 176 des Speisewassers 162 verdampft wird. Das verdampfte Speisewasser (Wasserdampf 178) wird dem Niederdruckteil 72 der Dampfturbineneinheit 66 zugeführt und erhöht dort den Massenstrom.

Ein weiterer Teilstrom 130 wird zu einer Wärmeübertragereinheit 28 geführt, in welcher Wärme an einen externer Wärmeverbraucher 29, beispielsweise eine benachbarten Kraftwerksanlage, abgegeben wird.

Anstelle einer Rückführung über den Wasserkühler 30 kann der aus dem Direktkontaktwärmeübertrager 34 abgezogene Sumpfstrom 142 (Wasserstrom) auch direkt, also ohne Zwischenkühlung, in den Direktkontaktkühler 20 eingeleitet werden, wie in Figur 2 dargestellt. Der Sumpfstrom 142 wird hierbei oben in den Direktkontaktkühler 20 eingeleitet.

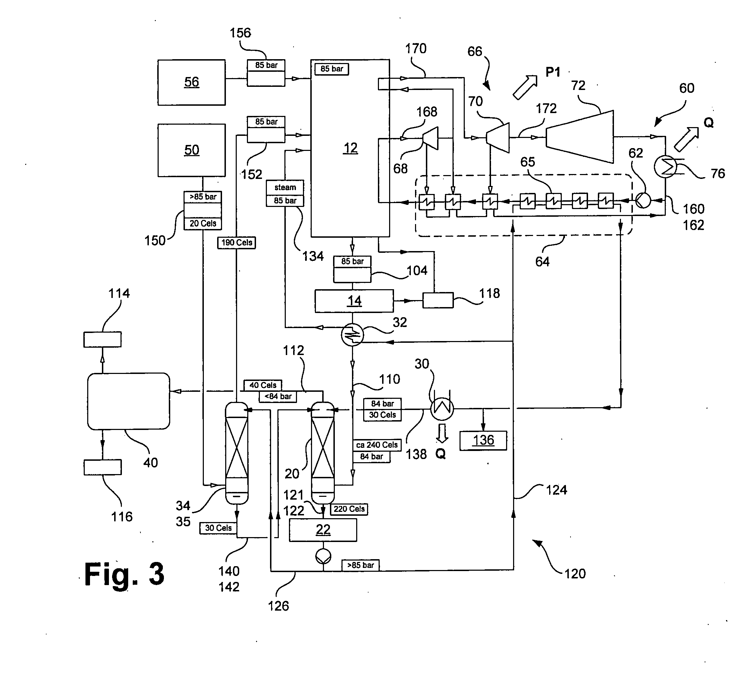

Die Ausführung gemäß Figur 3 unterscheidet sich von den zuvor beschriebenen Ausführungen durch eine Rückführung eines Wasser- oder Wasserdampfstromes in den Brennraum 12. Zur Rückführung von Wasser in den Brennraum 12 wird ein Teilstrom 132 des Sumpfstromes aus dem Direktkontaktkühler 20 abgezweigt. Dieser kann entweder direkt warm in den Brennraum 12 eingeleitet oder - wie in der Figur 2 dargestellt - zuvor verdampft werden. Der Teilstrom 132 wird hierbei in einem Wasserverdampfer 32 gegen heißes Rauchgas verdampft und als Wasserdampfrückführstrom 134 in den Brennraum 12 geleitet. Der Wasserverdampfer 32 ist im Rauchgasweg vor dem Direktkontaktkühler 20 angeordnet. Ein aus dem Wasserverdampfer 32 austretender, vorgekühlter Rauchgasstrom 110 wird in den Direktkontaktkühler 20 eingeleitet.

### Bezugszeichenliste

- 10: Vorrichtung zur Umwandlung von Energie
- 12: Brennraum
- 13: Rohrleitung
- 14: Partikelabtrenneinrichtung
- 20: Direktkontaktkühler
- 22: Wasserbehandlungseinrichtung
- 24: Pumpe
- 26: Speisewasserverdampfer
- 28: Wärmeübertragereinheit
- 29: externer Wärmeverbraucher
- 30: Wasserkühler
- 32: Wasserverdampfer
- 34: Direktkontaktwärmeübertrager
- 35: Sauerstoffvorwärmer
- 36: Gebläse
- 40: CO₂-Abtrenneinheit
- 42: CO₂-Kondensator
- 44: Gas-Flüssig-Trennbehälter
- 50: Luftzerlegungseinrichtung
- 56: Brennstoffbereitstellungseinheit
- 60: Dampfkraftwerkkreislauf
- 62: Speisewasserpumpe
- 64: Speisewasservorwärmteil
- 65: Wärmetauscher
- 66: Dampfturbineneinheit
- 68: Hochdruckteil
- 70: Mitteldruckteil
- 72: Niederdruckteil
- 76: Kondensator
- 90: Gegenstromwärmeübertrager
- 92: Rauchgaskühler
- 94: Wassertrennbehälter
- 96: CO₂-Kondensator
- 98: CO₂-Trennbehälter
- 104: Rauchgas
- 106: erster Teilstrom
- 108: zweiter Teilstrom
- 110: vorgekühlter Rauchgasstrom
- 112: abgekühlter Rauchgasstrom
- 114: Restgasstrom
- 116: CO₂-Produktstrom
- 118: Asche
- 120: Wasserkreislauf
- 121: Flüssigstrom
- 122: Wasserstrom
- 124: Teilstrom zur Speisewasservorwärmung
- 126: Teilstrom zur Sauerstöffvorwärmung
- 128: Teilstrom zum Speisewasserverdampfer
- 130: Teilstrom zur Wärmeübertragereinheit
- 132: Teilstrom zum Wasserverdampfer
- 134: Wasserdampfrückführstrom
- 136: Wasserproduktstrom
- 138: Kühlmittelstrom
- 140: Flüssigstrom
- 142: Sumpfstrom
- 150: Sauerstoffstrom
- 152: vorgewärmter Sauerstoffstrom
- 156: Brennstoffstrom
- 160: Arbeitsfluid
- 162: Speisewasser
- 168: Hochdruckdampf
- 170: Mitteldruckdampf
- 172: Niederdruckdampf
- 176: Teil des Speisewassers zum Speisewasserverdampfer
- 178: Wasserdampf

## Patentansprüche

1. Verfahren zur Umwandlung von Energie, bei welchem ein
kohlenwasserstoffhaltiger Energieträger in einem Brennraum (12) in einer sauerstoffangereicherten Atmosphäre verbrannt und erzeugte Wärme an einen Dampfkraftwerkkreislauf (60) übertragen wird, **dadurch gekennzeichnet, dass** Rauchgas (104), welches bei der Verbrennung des kohlenwasserstoffhaltigen Energieträges entsteht, in einem Direktkontaktkühler (20) in direktem Kontakt zu einem Wasser enthaltenden Kühlmittelstrom (138) abgekühlt wird.

2. Verfahren nach Anspruch 1, wobei die Verbrennung des kohlenwasserstoffhaltigen Energieträgers in dem Brennraum (12) bei einem Druck oberhalb Atmosphärendruck erfolgt.

3. Verfahren nach Anspruch 1 oder 2, wobei die Verbrennung des kohlenwasserstoffhaltigen Energieträges in dem Brennraum (12) bei mindestens 8 bar (abs.), vorzugsweise mindestens 10 bar (abs.), oder bei mindestens 40 bar (abs.), vorzugsweise mindestens 80 bar (abs.), erfolgt.

4. Verfahren nach einem der vorstehenden Ansprüche, wobei ein aus dem Direktkontaktkühler (20) abgezogener Flüssigstrom (121) als Wärmeträgermedium zur Energienutzung verwendet wird.

5. Verfahren nach einem der vorstehenden Ansprüche, wobei zumindest ein Teil eines aus dem Direktkontaktkühler (20) abgezogenen Flüssigstroms (121) zur Vorwärmung eines Arbeitsfluides (160) des Dampfkraftwerkkreislaufes (60) verwendet wird.

6. Verfahren nach einem der vorstehenden Ansprüche, wobei die Vorwärmung des Arbeitsfluides (160) in zumindest einem Flüssig-Flüssig-Wärmeübertrager erfolgt.

7. Verfahren nach einem der vorstehenden Ansprüche, wobei zumindest ein Teil eines aus dem Direktkontaktkühler (20) abgezogenen Flüssigstroms (121) zur Verdampfung eines Arbeitsfluides (160) des Dampfkraftwerkkreislaufes (60) verwendet wird.

8. Verfahren nach einem der vorstehenden Ansprüche, wobei zumindest ein Teil eines aus dem Direktkontaktkühler (20) abgezogenen Flüssigstroms (121) in einem Sauerstoffvorwärmer (35) zur Vorwärmung eines Sauerstoffstromes (150) verwendet wird.

9. Verfahren nach Anspruch 8, wobei der Sauerstoffstrom (150) in einem Direktkontaktwärmeübertrager (34) in direktem Kontakt zu dem aus dem Direktkontaktkühler (20) abgezogenen Teil des Flüssigstroms (121) erwärmt wird.

10. Verfahren nach Anspruch 8 oder 9, wobei ein aus dem Sauerstoffvorwärmer (35) abgezogener Flüssigstrom (140) zumindest teilweise als Kühlmittelstrom in den Direktkontaktkühler (20) rückgeführt wird.

11. Verfahren nach einem der vorstehenden Ansprüche, wobei ein aus dem Direktkontaktkühler (20) abgezogener Flüssigstrom (121) nach Abkühlung zumindest teilweise als Kühlmittelstrom (138) in den Direktkontaktkühler (20) rückgeführt wird.

12. Verfahren nach einem der vorstehenden Ansprüche, wobei ein aus dem Direktkontaktkühler (20) abgezogener Flüssigstrom (121) einer Wasserbehandlungseinrichtung (22) zugeführt wird.

13. Verfahren nach einem der vorstehenden Ansprüche, wobei ein Teil des Rauchgases (104) in den Brennraum (12) rückgeführt wird.

14. Verfahren nach einem der vorstehenden Ansprüche, wobei ein Teil eines aus dem Direktkontaktkühler (20) abgezogenen Flüssigstroms (121) in den Brennraum (12) rückgeführt wird.

15. Vorrichtung zur Umwandlung von Energie, die insbesondere zur Durchführung eines Verfahrens nach einem der Ansprüche 1 bis 14 eingerichtet ist, mit einem Brennraum (12) zur Verbrennung eines kohlenwasserstoffhaltigen Energieträgers in einer sauerstoffangereicherten Atmosphäre und einem Dampfkraftwerkkreislauf (60), welcher zur Nutzung einer in dem Brennraum (12) erzeugten Wärme mit dem Brennraum (12) energetisch gekoppelt ist, **dadurch gekennzeichnet, dass** dem Brennraum (12) ein Direktkontaktkühler (20) nachgeschaltet ist, in welchem ein bei der Verbrennung des kohlenwasserstoffhaltigen Energieträges entstehendes Rauchgas (104) in direktem Kontakt zu einem Wasser enthaltenden Kühlmittelstrom (138) abkühlbar ist.
